# EUROPEAN PATENT SPECIFICATION

(11) **EP 3 913 722 B1**
(45) Date of publication and mention of the grant of the patent: **31.01.2024**
(21) Application number: 19957409.6
(22) Date of filing: 24.12.2019
(51) Int. Cl.: H01M 10/0569, H01M 10/0525, H01M 4/36, H01M 4/38, H01M 4/587, H01M 10/0567, H01M 10/0568, H01M 4/133, H01M 4/48

(54) **SECONDARY BATTERY AND APPARATUS CONTAINING SECONDARY BATTERY**
SEKUNDÄRBATTERIE UND VORRICHTUNG MIT DER SEKUNDÄRBATTERIE
BATTERIE SECONDAIRE ET APPAREIL CONTENANT LA BATTERIE SECONDAIRE

(43) Date of publication of application: 24.11.2021
(73) Proprietor: Contemporary Amperex Technology Co., Limited, Jiaocheng District Ningde City Fujian 352100 (CN)
(72) Inventor: WU, Zeli, Ningde, Fujian 352100 (CN); HAN, Changlong, Ningde, Fujian 352100 (CN)
(74) Representative: Kraus & Weisert Patentanwälte PartGmbB
(86) International application number: PCT/CN2019/127980
(87) International publication number: WO 2021/127999

(56) References cited:
- CN-A- 101 667 660
- CN-A- 102 195 083
- CN-A- 103 608 964
- CN-A- 108 461 804
- CN-A- 109 244 530
- KR-A- 20180 093 709

## Description

### Field

The application relates to the technical field of batteries, in particular to a secondary battery and an apparatus including the same.

### Background

As fossil energy is increasingly depleted and the pressure of environment pollution becomes higher and higher, the automobile industry urgently needs a type of new energy as the driving power. The secondary battery stands out due to its high energy density, no memory effect, high working voltage and the like, and thus becomes the preferred solution for current new energy vehicle power supply. The new energy vehicle industry generally requires a power supply of high energy density, long cycle life, and the like, but it is a big challenge for a conventional secondary battery.

Currently, a silicon-based material with high specific capacity used as a negative active material of the secondary battery can effectively improve the energy density of the secondary battery, but the silicon-based material would become much swollen in the charge-discharge cycle, causing electrochemical performance of the secondary battery to be reduced sharply.

Therefore, in order to meet demands of an electric vehicle on the performance of the secondary battery, a secondary battery with good comprehensive performance is needed.

### Summary

In view of the problems in the background art, the application provides a secondary battery and an apparatus including the same. In the premise of having a high energy density, the secondary battery can simultaneously have good high-temperature storage performance and high-temperature cycle performance.

In order to fulfill the aim above, a first aspect of the application provides a secondary battery and an apparatus comprises a secondary battery, according to the appended claims.

According to the secondary battery provided by the application, a negative electrode includes the silicon-based material, the organic solvent in the electrolyte contains the ethylene carbonate (EC) and the ethyl methyl carbonate (EMC) which have specific content, and under the combined action of the substances above, the secondary battery has good high-temperature storage performance and high-temperature cycle performance. The apparatus provided by the application includes the secondary battery, and thus at least has the same advantages with the secondary battery,

CN 109 244 530 A discloses a secondary battery comprising a negative current collector coated with a negative active material film, the negative active material being silicon carbon graphite composite, a positive current collector coated with a positive active material film, the positive active material being Li[Ni_{0.89}Co_{0.09}Mn_{0.02}]O₂. The electrolyte comprises a lithium salt and ethylene carbonate (EC), dimethyl carbonate (DMC), and ethyl methyl carbonate (EMC) mixed at a volume ratio of 5:15:80.

### Brief Description of the Figures

Fig. 1 is a schematic diagram of an embodiment of a secondary battery.
Fig. 2 is a schematic diagram of an embodiment of a battery module.
Fig. 3 is a schematic diagram of an embodiment of a battery pack.
Fig. 4 is an exploded view of Fig. 3.
Fig. 5 is a schematic diagram of an embodiment of an apparatus using a secondary battery as a power supply.

Where, reference signs are illustrated as follows:
1. battery pack
2. upper box body
3. lower box body
4. battery module
5. secondary battery

### Detailed Description of the Embodiments

A secondary battery and an apparatus including the same according to the application will be illustrated in detail below.

The secondary battery according to the application includes: a negative electrode plate and an electrolyte; the negative electrode plate includes a negative current collector and a negative electrode film which is disposed on at least one surface of the negative current collector and includes a negative active material; and the electrolyte includes electrolyte salt and an organic solvent, wherein the negative active material contains a silicon-based material; and the organic solvent contains ethylene carbonate (EC) and ethyl methyl carbonate (EMC), a weight ratio of the ethylene carbonate (EC) in the organic solvent is less than or equal to 10%, and a weight ratio of the ethyl methyl carbonate (EMC) in the organic solvent is 80% to 95%.

In order to improve energy density of the secondary battery, the silicon-based material is used as the negative active material according to the application, but the silicon-based negative active material has a serious volume effect in the battery cycle process, resulting in limitation to the actual application of the secondary battery. Through a great deal of researches, an inventor of the application finds that when the organic solvents of the ethylene carbonate (EC) and the ethyl methyl carbonate (EMC), which have specific content, are added into the electrolyte, high-temperature storage performance and high-temperature cycle performance of the secondary battery using the silicon-based material as the negative active material can be effectively improved. The inventor supposes that when the EC and EMC solvents with the specific content are simultaneously added into the electrolyte, not only can the electrolyte salt be well dissociated, but also gas production in the battery cycle process can be effectively reduced under the combined action of the EC and the EMC, and thus, the secondary battery shows good high-temperature cycle performance and high-temperature storage performance while the energy density is improved.

In the secondary battery according to a first aspect of the application, preferably, the weight ratio of the ethylene carbonate (EC) in the organic solvent is less than or equal to 5%.

In the secondary battery according to the first aspect of the application, preferably, the weight ratio of the ethyl methyl carbonate (EMC) in the organic solvent is 85% to 95%.

In the secondary battery according to the first aspect of the application, preferably, the electrolyte salt includes lithium hexafluorophosphate (LiPF6) and lithium bisfluorosulfonimide (LiFSI), and a concentration of the lithium bisfluorosulfonimide (LiFSI) is 0.8 mol/L to 1.3 mol/L. When the electrolyte simultaneously includes the lithium hexafluorophosphate (LiPF6) and the lithium bisfluorosulfonimide (LiFSI) and the concentration of the lithium bisfluorosulfonimide (LiFSI) is within a given range, the high-temperature storage performance and high-temperature cycle performance of the secondary battery are further improved. More preferably, the concentration of the lithium bisfluorosulfonimide (LiFSI) is 0.9 mol/L to 1.1 mol/L.

In the secondary battery according to the first aspect of the application, preferably, the organic solvent may further contain one or more of dimethyl carbonate (DMC) and diethyl carbonate (DEC); more preferably, a weight ratio of the dimethyl carbonate (DMC) and/or the diethyl carbonate (DEC) in the organic solvent is less than or equal to 10%.

In the secondary battery according to the first aspect of the application, preferably, the electrolyte further includes an additive, and the additive contains one or more of fluoroethylene carbonate (FEC), 1,2,3-dioxathiolane 2,2-dioxide (DTD), 1,3-propane sultone (PS), 1,3-propenyl-sultone (PST), succinic anhydride (SA), tris(trimethylsilane) borate (TMSB), tris(trimethylsilane) phosphate (TMSP), lithium difluoro(oxalato)borate (LiDFOB), and lithium difluorodioxaltophosphate (LiDFOP).

In the secondary battery according to the first aspect of the application, preferably, an electrical conductivity of the electrolyte at a temperature of 25° C is 7 mS/cm to 9.5 mS/cm, more preferably, the electrical conductivity of the electrolyte at the temperature of 25° C is 7.5 mS/cm to 9.0 mS/cm.

In the secondary battery according to the first aspect of the application, preferably, a viscosity of the electrolyte at the temperature of 25° C is 3.5 mPa·s to 5.5 mPa·s, more preferably, the viscosity of the electrolyte at the temperature of 25° C is 4 mPa·s to 5 mPa s.

In the secondary battery according to the first aspect of the application, preferably, the silicon-based material includes one or more of simple substance silicon, a silicon carbon compound, a silicon oxygen compound, a silicon nitrogen compound, and silicon alloy; more preferably, the silicon-based material includes the silicon oxygen compound.

In the secondary battery according to the first aspect of the application, preferably, the negative active material further includes a carbon material; more preferably, the carbon material includes one or more of natural graphite, artificial graphite, soft carbon, and hard carbon; more preferably, the carbon material includes one or more of the natural graphite and the artificial graphite.

In the secondary battery according to the first aspect of the application, preferably, a mass ratio of the silicon-based material in the negative active material is greater than or equal to 15%; more preferably, the mass ratio of the silicon-based material in the negative active material is 20% to 40%.

In the secondary battery according to the first aspect of the application, preferably, a type of the negative current collector is not specifically limited, and can be selected according to actual demands. Specifically, the negative current collector can be selected from a metal foil, e.g., a copper foil.

In the secondary battery according to the first aspect of the application, the secondary battery further includes a positive electrode plate, and the positive electrode plate includes a positive current collector and a positive electrode film which is disposed on at least one surface of the positive current collector and includes a positive active material.

In the secondary battery according to the first aspect of the application, preferably, the positive active material includes one or more of a lithium nickel cobalt manganese oxygen compound and a lithium nickel cobalt aluminium oxide. The lithium nickel cobalt manganese oxygen compound and the lithium nickel cobalt aluminium oxide, as the positive active materials of the secondary battery, have the advantages of high specific capacity, long cycle life, and the like, and are used in concert with the negative active material including the silicon-based material so as to further improve electrochemical performance of the battery.

In the secondary battery according to the first aspect of the application, preferably, the positive active material includes one or more of LiₐNi_{b}Co_{c}M_{d}M'ₑO_{f}A_{g} or LiₐNi_{b}Co_{c}M_{d}M'ₑO_{f}A_{g} with a coating layer on at least one part of the surface thereof, wherein 0.8≤a≤1.2, 0.5≤b<1, 0<c<1, 0<d<1, 0≤e≤0.1, 1≤f≤2, 0≤g≤1, M is selected from one or more of Mn and Al, M' is selected from one or more of Zr, Al, Zn, Cu, Cr, Mg, Fe, V, Ti, and B, and A is selected from one or more of N, F, S, and Cl.

The coating layer of the positive active material may be a carbon layer, an oxide layer, an inorganic salt layer or a conductive macromolecule layer. By carrying out coating modification on the surface of the positive active material, the cycle performance of the secondary battery can be further improved.

In the secondary battery according to the first aspect of the application, further, the positive active material can further include one or more of a lithium manganese oxide (e.g., spinel type lithium manganate, layered lithium manganite, and the like) and modified compounds thereof, lithium iron phosphate and modified compounds thereof, and lithium cobaltate and modified compounds thereof.

In the secondary battery according to the first aspect of the application, a type of the positive current collector is not specifically limited, and can be selected according to actual demands. Specifically, the positive current collector can be selected from a metal foil, e.g., an aluminium foil.

In the secondary battery according to the first aspect of the application, the secondary battery further includes a separation film. A type of the separation film is not specifically limited, and can be selected according to actual demands. Specifically, the separation film can be selected from one or more of a polyethylene film, a polypropylene film, a polyvinylidene fluoride film, and multi-layer composite films thereof.

In some embodiments, the secondary battery may include an outer package for packaging the positive electrode plate, the negative electrode plate, and the electrolyte. As an example, the positive electrode plate, the negative electrode plate, and the separation film can be formed into an electrode assembly with a laminated structure by lamination or an electrode assembly with a wound structure by winding, and the electrode assembly is packaged in the outer package; and the electrolyte wets the electrode assembly. The number of the electrode assemblies in the secondary battery may be one or more, and can be regulated as required.

In some embodiments, the outer package of the secondary battery may be a soft package, e.g., a bag-type soft package. A material of the soft package may be plastics, and for example, may include one or more of polypropylene (PP), polybutylene terephthalate (PBT), polybutylene succinate (PBS), and the like. The outer package of the secondary battery may also be a hard housing, e.g., an aluminium housing and the like.

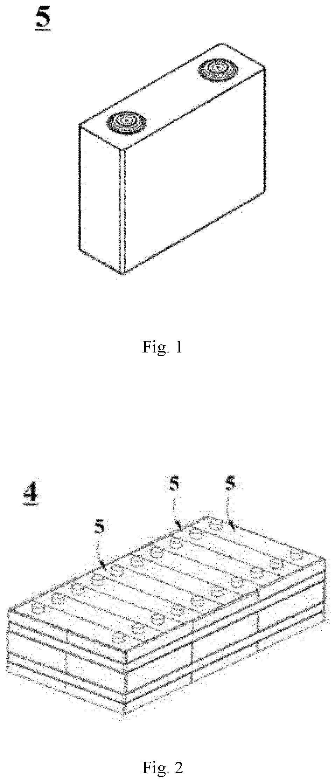

The application does not make any special limitation to the shape of the secondary battery, and the secondary battery may be of a cylinder shape, a square shape or other random shapes. Fig. 1 shows a secondary battery 5 with a square structure as an example.

In some embodiments, the secondary battery can be assembled into a battery module, the battery module may include a plurality of secondary batteries, and the specific number of the secondary batteries may be regulated according to application and capacity of the battery module.

Fig. 2 is a battery module 4 as an example. With reference to Fig. 2, in the battery module 4, a plurality of secondary batteries 5 may be sequentially disposed along a length direction of the battery module 4. Certainly, the secondary batteries 5 may also be disposed in other random manners. Further, the plurality of secondary batteries 5 can be fixed by fasteners.

Optionally, the battery module 4 can further include a housing with an accommodation space, and the plurality of secondary batteries 5 are accommodated in the accommodation space.

In some embodiments, the battery module can also be assembled into a battery pack, and the number of the battery modules in the battery pack can be regulated according to application and capacity of the battery pack.

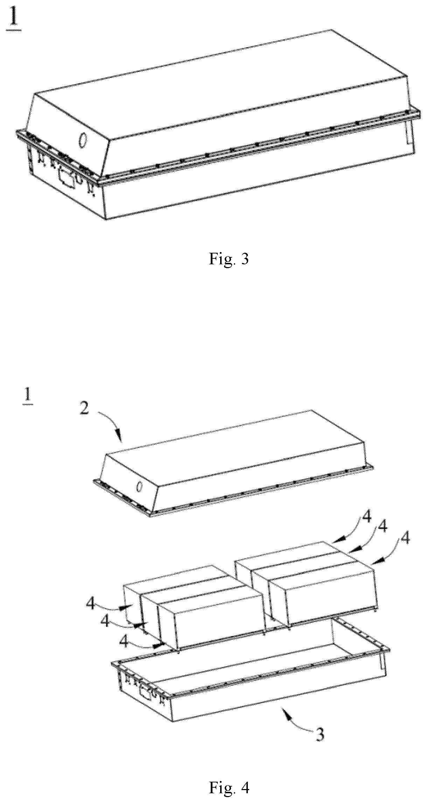

Fig. 3 and Fig. 4 show a battery pack 1 as an example. With reference to Fig. 3 and Fig. 4, the battery pack 1 may internally include a battery box and a plurality of battery modules 4 disposed in the battery box. The battery box includes an upper box body 2 and a lower box body 3, the upper box body 2 can be covered on the lower box body 3, and an enclosed space for accommodating the battery modules 4 is formed. The plurality of battery modules 4 can be disposed in the battery box in a random manner.

The second aspect of the application provides an apparatus, including the secondary battery according to the first aspect of the application. The secondary battery can be used as a power supply of the apparatus, or can be used as an energy storage unit of the apparatus. The apparatus includes, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf cart, an electric truck, and the like), an electric train, a ship, a satellite, an energy storage system, and the like.

The apparatus may select the secondary battery, the battery module or the battery pack depending on the demands for application of the apparatus.

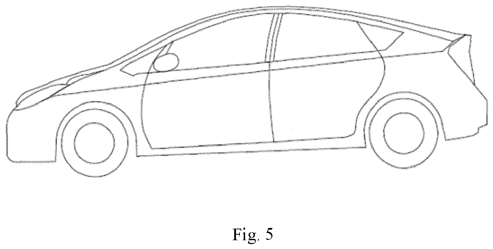

Fig. 5 shows an apparatus as an example. The apparatus is the pure electric vehicle, the hybrid electric vehicle, or the plug-in hybrid electric vehicle, and the like. In order to meet demands of the apparatus for high power and a high energy density of the secondary battery, the battery pack or the battery module can be adopted.

An apparatus as another example may be the mobile phone, a tablet personal computer, the notebook computer, and the like. The apparatus usually has lightening and thinning demands, and can use the secondary battery as a power supply.

The application will be further illustrated below in combination with embodiments. It should be understood that those embodiments are merely used for illustrating the application, but not intended to limit the scope of the application.

Secondary batteries in embodiments 1 to 11 and contrast examples 1 to 3 are all prepared according to the following method.
(1) Preparation of a positive electrode plate:
   a positive active material NCM811 (LiNi_{0.8}Co_{0.1}Mn_{0.1}O₂), an adhesive polyvinylidene fluoride, and a conductive additive Super P are mixed according to a weight ratio of 98:1:1, N-methyl pyrrolidone (NMP) is added, and under the action of a vacuum stirrer, stirring is carried out until a system is changed into a transparent state, so as to obtain a positive electrode size; the positive electrode size is uniformly coated on an aluminium foil; and the aluminium foil is transferred to a drying oven to be dried after being air-dried at the room temperature, and then is subjected to cold pressing and slitting to obtain the positive electrode plate.
(2) Preparation of a negative electrode plate:
   after negative active materials of silicon monoxide and artificial graphite are mixed according to a mass ratio of 2:8, a mixture is mixed with the conductive additive Super P, a thickener carboxymethylcellulose sodium (CMC-Na), and an adhesive styrene butadiene rubber (SBR) according to a mass ratio of 92:2:2:4, deionized water is added, and under the action of the vacuum stirrer, a negative electrode size is obtained; the negative electrode size is uniformly coated on a negative current collector copper foil; and the copper foil is transferred to the drying oven to be dried after being air-dried at the room temperature, and then is subjected to cold pressing and slitting to obtain the negative electrode plate.
(3) Preparation of an electrolyte:
   in an argon atmosphere glove box of which moisture content is less than 10 ppm, organic solvents are mixed according to a weight ratio to obtain a mixed solvent, then sufficiently dried electrolyte salt is dissolved in the mixed solvent, then additives (8% of FEC, 0.5% of SA, and 0.5% of TMSP) are added, and after uniform mixing is carried out, the electrolyte is obtained, content of each additive being a weight percent calculated on the basis of a total weight of the electrolyte, wherein composition of the organic solvents and a specific type and content of the electrolyte salt are as shown in Table 1. In Table 1, content of each organic solvent is a weight percent calculated on the basis of a total weight of the organic solvents; and a concentration of each electrolyte salt is a concentration calculated on the basis of a total concentration of the electrolyte.
(4) Preparation of a separation film:
   a polyethylene (PE) film is used as the separation film.
(5) Preparation of the secondary battery:
   the positive electrode plate, the separation film, and the negative electrode plate are stacked in sequence, the separation film is enabled to be positioned between the positive and negative electrode plates to take a separation effect, and then winding is carried out to obtain an electrode assembly; and the electrode assembly is placed in an outer package, the prepared electrolyte is injected into a dried secondary battery, and processes of vacuum packaging, standing, formation, shaping, and the like are carried out to obtain the secondary battery.

**Table 1 Parameters of Embodiments 1-11 and Contrast Examples 1-3**

| Sequence Number | Organic Solvents | Type and Concentration of Electrolyte Salt |
|---|---|---|
| Embodiment 1 | EC:EMC=10:90 | LiPF₆ (1.3 mol/L) |
| Embodiment 2 | EC:EMC=5:95 | LiPF₆ (1.3 mol/L) |
| Embodiment 3 | EC:EMC:DEC=10:80:10 | LiPF₆ (1.3 mol/L) |
| Embodiment 4 | EC:EMC:DEC=5:85:10 | LiPF₆ (1.3 mol/L) |
| Embodiment 5 | EC:EMC:DMC=10:80:10 | LiPF₆ (1.3 mol/L) |
| Embodiment 6 | EC:EMC:DMC=5:85:10 | LiPF₆ (1.3 mol/L) |
| Embodiment 7 | EC:EMC=5:95 | LiPF₆ (0.5 mol/L) +LiFSI (0.8 mol/L) |
| Embodiment 8 | EC:EMC=5:95 | LiPF₆ (0.4 mol/L) +LiFSI (0.9 mol/L) |
| Embodiment 9 | EC:EMC=5:95 | LiPF₆ (0.3 mol/L) +LiFSI (1.0 mol/L) |
| Embodiment 10 | EC:EMC=5:95 | LiPF₆ (0.2 mol/L) +LiFSI (1.1 mol/L) |
| Embodiment 11 | EC:EMC=5:95 | LiPF₆ (0.1 mol/L) +LiFSI (1.2 mol/L) |
| Contrast Example 1 | EC:EMC=30:70 | LiPF₆ (1.3 mol/L) |
| Contrast Example 2 | EC:EMC:DMC=20:50:30 | LiPF₆ (1.3 mol/L) |
| Contrast Example 3 | EC:EMC:DEC=20:50:30 | LiPF₆ (1.3 mol/L) |

Then the testing process of the secondary battery is illustrated.

### (1) High-temperature storage performance test

At a temperature of 60° C, the secondary battery is charged to have a voltage of 4.25V with a constant current of 0.5C and then is charged to have a current of 0.05C with the constant voltage of 4.25V, and the volume of a lithium ion battery at the moment is tested by a drainage method and is recorded as Vi; and then the secondary battery is placed into a calorstat at a temperature of 60° C and is taken out after being stored for 30 days, and the volume of the secondary battery at the moment is tested and recorded as V₂.

The volume expansion ratio (%) after the secondary battery is stored for 30 days at the temperature of 60° C = [(V2-V1) /V1 ]×100%.

### (2) High-temperature cycle performance test

At a temperature of 45° C, the secondary battery is charged to have a voltage of 4.25V with a constant current of 1C, then is charged to have a current of 0.05C with the constant voltage of 4.25V, is stood for Smin and then discharged to have a voltage of 2.5V with the constant current of 1C, it is the first charge/discharge cycle of the secondary battery, this discharge capacity is recorded as discharge capacity of the first cycle of the secondary battery, the secondary battery is subjected to charge/discharge cycle for 800 times according to the method, and discharge capacity after the secondary battery is cycled for 800 times is recorded.

A capacity retention ratio (%) after the secondary battery is cycled for 800 times at the temperature of 45° C = (the discharge capacity after the secondary battery is cycled for 800 times/the discharge capacity of the first cycle of the secondary battery)×100%.

**Table 2 Performance Test Results of Embodiments 1-11 and Contrast Examples 1-3**

| Sequence Number | Volume Expansion Ratio (%) after Storage for 30 Days at the Temperature of 60°C | Capacity Retention Ratio (%) after Cycle for 800 Times at the Temperature of 45°C |
|---|---|---|
| Embodiment 1 | 11.5 | 78.1 |
| Embodiment 2 | 8.8 | 78.5 |
| Embodiment 3 | 12.5 | 76.3 |
| Embodiment 4 | 7.8 | 74.6 |
| Embodiment 5 | 13.5 | 78.9 |
| Embodiment 6 | 13.2 | 78.1 |
| Embodiment 7 | 7.5 | 78.8 |
| Embodiment 8 | 7.4 | 80.1 |
| Embodiment 9 | 7.1 | 81.5 |
| Embodiment 10 | 6.8 | 82.1 |
| Embodiment 11 | 6.5 | 79.5 |
| Contrast Example 1 | 18.6 | 72.2 |
| Contrast Example 2 | 23.5 | 70.5 |
| Contrast Example 3 | 20.1 | 71.2 |

It can be seen from the test results as shown in Table 2 that: the organic solvent of the secondary battery according to the embodiments 1 to 11 includes the ethylene carbonate (EC) and the ethyl methyl carbonate (EMC) which have specific content, so that the secondary battery can give consideration to good high-temperature storage performance and high-temperature cycle performance; specially, when the electrolyte salt of the secondary battery simultaneously includes the lithium hexafluorophosphate (LiPF6) and the lithium bisfluorosulfonimide (LiFSI) and a concentration of the lithium bisfluorosulfonimide (LiFSI) meets a specific concentration, as shown in the embodiments 7 to 11, the high-temperature storage performance and the high-temperature cycle performance of the secondary battery are better.

The content of the ethylene carbonate (EC) in the electrolyte in the contrast example 1 is over 10%, so that both the high-temperature storage performance and the high-temperature cycle performance of the obtained secondary battery are poor.

The content of the ethylene carbonate (EC) in the electrolytes in the contrast examples 2 and 3 is over 10%, and the content of the ethyl methyl carbonate (EMC) does not meet a range of 80% to 95%, so that both the high-temperature storage performance and the high-temperature cycle performance of the obtained secondary batteries are poor.

## Claims

1. A secondary battery, comprising: a negative electrode plate and an electrolyte; the negative electrode plate including a negative current collector and a negative electrode film which is disposed on at least one surface of the negative current collector and includes a negative active material; and the electrolyte including electrolyte salt and an organic solvent, wherein
the negative active material comprises a silicon-based material;
the organic solvent comprises ethylene carbonate (EC) and ethyl methyl carbonate (EMC), a weight ratio of the ethylene carbonate (EC) in the organic solvent is less than or equal to 10%, and a weight ratio of the ethyl methyl carbonate (EMC) in the organic solvent is 80% to 95%.

2. The secondary battery according to claim 1, wherein the weight ratio of the ethylene carbonate (EC) in the organic solvent is less than or equal to 5%.

3. The secondary battery according to any one of claims 1 to 2, wherein the weight ratio of the ethyl methyl carbonate (EMC) in the organic solvent is 85% to 95%.

4. The secondary battery according to any one of claims 1 to 3, wherein the electrolyte salt includes lithium hexafluorophosphate (LiPF₆) and lithium bisfluorosulfonimide (LiFSI), and a concentration of the lithium bisfluorosulfonimide (LiFSI) is 0.8 mol/L to 1.3 mol/L, preferably 0.9 mol/L to 1.1 mol/L.

5. The secondary battery according to any one of claims 1 to 4, wherein the organic solvent further comprises one or more of dimethyl carbonate (DMC) and diethyl carbonate (DEC);
preferably, a mass ratio of the dimethyl carbonate (DMC) and/or the diethyl carbonate (DEC) in the organic solvent is less than or equal to 10%.

6. The secondary battery according to any one of claims 1 to 5, wherein the electrolyte further includes an additive, and the additive comprises one or more of fluoroethylene carbonate (FEC), 1,2,3-dioxathiolane 2,2-dioxide (DTD), 1,3-propane sultone (PS), 1,3-propenyl-sultone (PST), vinylene carbonate (VC), succinic anhydride (SA), tris(trimethylsilane) borate (TMSB), tris(trimethylsilane) phosphate (TMSP), lithium difluoro(oxalato)borate (LiDFOB), and lithium difluorodioxaltophosphate (LiDFOP).

7. The secondary battery according to any one of claims 1 to 6, wherein
an electrical conductivity of the electrolyte at a temperature of 25° C is 7 mS/cm to 9.5 mS/cm, preferably, the electrical conductivity of the electrolyte at the temperature of 25° C is 7.5 mS/cm to 9.0 mS/cm; and/or
a viscosity of the electrolyte at the temperature of 25° C is 3.5 mPa·s to 5.5 mPa·s, preferably, the viscosity of the electrolyte at the temperature of 25° C is 4 mPa·s to 5 mPa s.

8. The secondary battery according to any one of claims 1 to 7, wherein the silicon-based material includes one or more of simple substance silicon, a silicon carbon compound, a silicon oxygen compound, a silicon nitrogen compound, and silicon alloy; preferably, the silicon-based material includes the silicon oxygen compound.

9. The secondary battery according to any one of claims 1 to 8, wherein the negative active material further includes a carbon material, and the carbon material includes one or more of natural graphite, artificial graphite, soft carbon, and hard carbon; preferably, the carbon material includes one or more of the natural graphite and the artificial graphite.

10. The secondary battery according to any one of claims 1 to 9, wherein a mass ratio of the silicon-based material in the negative active material is greater than or equal to 15%; preferably, the mass ratio of the silicon-based material in the negative active material is 20% to 40%.

11. The secondary battery according to any one of claims 1 to 10, further comprising a positive electrode plate, the positive electrode plate including a positive current collector and a positive electrode film which is disposed on at least one surface of the positive current collector and includes a positive active material, the positive active material including one or more of a lithium nickel cobalt manganese oxygen compound and a lithium nickel cobalt aluminium oxide;
preferably, the positive active material including one or more of a material with a general formula of LiₐNi_{b}Co_{c}M_{d}M'ₑO_{f}A_{g} or a material LiₐNi_{b}Co_{c}M_{d}M'ₑO_{f}A_{g} with a coating layer on at least one part of the surface thereof, wherein 0.8≤a≤1.2, 0.5≤b<1, 0<c<1, 0<d<1, 0≤e≤0.1, 1≤f≤2, 0≤g≤1, M is selected from one or more of Mn and Al, M' is selected from one or more of Zr, Al, Zn, Cu, Cr, Mg, Fe, V, Ti, and B, and A is selected from one or more of N, F, S, and Cl.

12. The secondary battery according to claim 11, wherein the positive active material further includes one or more of a lithium nickel oxide, a lithium manganese oxide, lithium iron phosphate, lithium manganese phosphate, lithium manganese iron phosphate, lithium cobaltate, and modified compounds thereof.

13. An apparatus, comprising the secondary battery according to any one of claims 1 to 12.

## Patentansprüche

1. Sekundärbatterie, umfassend: eine negative Elektrodenplatte und einen Elektrolyten; wobei die negative Elektrodenplatte einen negativen Stromkollektor und einen negativen Elektrodenfilm enthält, der auf mindestens einer Oberfläche des negativen Stromkollektors angeordnet ist und ein negatives aktives Material enthält; und wobei der Elektrolyt ein Elektrolytsalz und ein organisches Lösungsmittel enthält, wobei
das negative aktive Material aus einem Material auf Siliziumbasis besteht;
das organische Lösungsmittel Ethylencarbonat (EC) und Ethylmethylcarbonat (EMC) umfasst, ein Gewichtsverhältnis des Ethylencarbonats (EC) in dem organischen Lösungsmittel weniger als oder gleich 10% beträgt und ein Gewichtsverhältnis des Ethylmethylcarbonats (EMC) in dem organischen Lösungsmittel 80% bis 95% beträgt.

2. Sekundärbatterie nach Anspruch 1, wobei das Gewichtsverhältnis des Ethylencarbonats (EC) in dem organischen Lösungsmittel weniger als oder gleich 5% beträgt.

3. Sekundärbatterie nach einem der Ansprüche 1 bis 2, wobei das Gewichtsverhältnis des Ethylmethylcarbonats (EMC) in dem organischen Lösungsmittel 85% bis 95% beträgt.

4. Sekundärbatterie nach einem der Ansprüche 1 bis 3, wobei das Elektrolytsalz Lithiumhexafluorphosphat (LiPF₆) und Lithiumbisfluorsulfonimid (LiFSI) enthält und die Konzentration des Lithiumbisfluorsulfonimids (LiFSI) 0,8 mol/L bis 1,3 mol/L, vorzugsweise 0,9 mol/L bis 1,1 mol/L beträgt.

5. Sekundärbatterie nach einem der Ansprüche 1 bis 4, wobei das organische Lösungsmittel außerdem Dimethylcarbonat (DMC) oder Diethylcarbonat (DEC) oder mehrere davon umfasst;
vorzugsweise das Massenverhältnis des Dimethylcarbonats (DMC) und/oder des Diethylcarbonats (DEC) in dem organischen Lösungsmittel weniger als oder gleich 10% beträgt.

6. Sekundärbatterie nach einem der Ansprüche 1 bis 5, wobei der Elektrolyt ferner ein Additiv enthält und das Additiv eines oder mehrere der folgenden umfasst: Fluorethylencarbonat (FEC), 1,2,3-Dioxathiolan-2,2-dioxid (DTD), 1,3-Propansulton (PS), 1,3-Propylsulton (PST), Vinylencarbonat (VC), Bernsteinsäureanhydrid (SA), Tris(trimethylsilan)borat (TMSB), Tris(trimethylsilan)phosphat (TMSP), Lithiumdifluor(oxalato)borat (LiDFOB) und Lithiumdifluordioxaltophosphat (LiDFOP).

7. Sekundärbatterie nach einem der Ansprüche 1 bis 6, wobei
eine elektrische Leitfähigkeit des Elektrolyten bei einer Temperatur von 25°C 7 mS/cm bis 9,5 mS/cm beträgt, vorzugsweise die elektrische Leitfähigkeit des Elektrolyten bei der Temperatur von 25°C 7,5 mS/cm bis 9,0 mS/cm beträgt; und/oder
eine Viskosität des Elektrolyten bei einer Temperatur von 25°C 3,5 mPa·s bis 5,5 mPa·s beträgt, vorzugsweise beträgt die Viskosität des Elektrolyten bei einer Temperatur von 25°C 4 mPa·s bis 5 mPa·s.

8. Sekundärbatterie nach einem der Ansprüche 1 bis 7, wobei das Material auf Siliziumbasis eines oder mehrere der folgenden enthält: einfaches Silizium, eine Silizium-Kohlenstoff-Verbindung, eine Silizium-Sauerstoff-Verbindung, eine Silizium-Stickstoff-Verbindung und eine Silizium-Legierung; vorzugsweise enthält das Material auf Siliziumbasis die Silizium-Sauerstoff-Verbindung.

9. Sekundärbatterie nach einem der Ansprüche 1 bis 8, wobei das negative aktive Material ferner ein Kohlenstoffmaterial enthält und das Kohlenstoffmaterial eines oder mehrere von Naturgraphit, künstlichem Graphit, weichem Kohlenstoff und hartem Kohlenstoff enthält; vorzugsweise enthält das Kohlenstoffmaterial eines oder mehrere von Naturgraphit und künstlichem Graphit.

10. Sekundärbatterie nach einem der Ansprüche 1 bis 9, wobei das Massenverhältnis des Materials auf Siliziumbasis im negativen aktiven Material größer oder gleich 15% ist; vorzugsweise ist das Massenverhältnis des Materials auf Siliziumbasis im negativen aktiven Material 20% bis 40%.

11. Sekundärbatterie nach einem der Ansprüche 1 bis 10, ferner umfassend eine positive Elektrodenplatte, wobei die positive Elektrodenplatte einen positiven Stromkollektor und einen positiven Elektrodenfilm enthält, der auf mindestens einer Oberfläche des positiven Stromkollektors angeordnet ist und ein positives aktives Material enthält, wobei das positive aktive Material eine oder mehrere aus einer Lithium-Nickel-Kobalt-Mangan-Sauerstoff-Verbindung und einem Lithium-Nickel-Kobalt-Aluminiumoxid enthält;
vorzugsweise enthält das positive aktive Material eines oder mehrere Materialien mit der allgemeinen Formel LiₐNi_{b}Co_{c}M_{d}M'ₑO_{f}A_{g} oder ein Material LiₐNi_{b}Co_{c}M_{d}M'ₑO_{f}A_{g} mit einer Überzugsschicht auf mindestens einem Teil der Oberfläche davon, wobei 0,8≤a≤1,2, 0.5≤b<1, 0<c<1, 0<d<1, 0≤e≤0,1, 1≤f≤2, 0≤g≤1, M ausgewählt ist aus einem oder mehreren von Mn und Al, M' ausgewählt ist aus einem oder mehreren von Zr, Al, Zn, Cu, Cr, Mg, Fe, V, Ti und B, und A ausgewählt ist aus einem oder mehreren von N, F, S und Cl.

12. Sekundärbatterie nach Anspruch 11, wobei das positive aktive Material weiterhin enthält: eines oder mehrere von Lithium-Nickel-Oxid, Lithium-Mangan-Oxid, Lithium-Eisenphosphat, Lithium-Mangan-Phosphat, Lithium-Mangan-Eisenphosphat, Lithium-Kobaltat und modifizierte Verbindungen davon.

13. Gerät, das die Sekundärbatterie nach einem der Ansprüche 1 bis 12 umfasst.

## Revendications

1. Batterie secondaire, comprenant : une plaque d'électrode négative et un électrolyte ; la plaque d'électrode négative comprenant un collecteur de courant négatif et un film d'électrode négative disposé sur au moins une surface du collecteur de courant négatif et comprenant un matériau actif négatif ; et l'électrolyte comprenant un sel d'électrolyte et un solvant organique, dans laquelle
le matériau actif négatif comprend un matériau à base de silicium ;
le solvant organique comprend du carbonate d'éthylène (EC) et du carbonate d'éthyle et de méthyle (EMC), un rapport en poids du carbonate d'éthylène (EC) dans le solvant organique est inférieur ou égal à 10 %, et un rapport en poids du carbonate d'éthyle et de méthyle (EMC) dans le solvant organique est compris entre 80 % et 95 %.

2. Batterie secondaire selon la revendication 1, dans laquelle le rapport en poids du carbonate d'éthylène (EC) dans le solvant organique est inférieur ou égal à 5 %.

3. Batterie secondaire selon l'une des revendications 1 à 2, dans laquelle le rapport en poids du carbonate d'éthyle et de méthyle (EMC) dans le solvant organique est compris entre 85 % et 95 %.

4. Batterie secondaire selon l'une des revendications 1 à 3, dans laquelle le sel d'électrolyte comprend de l'hexafluorophosphate de lithium (LiPF₆) et du bisfluorosulfonimide de lithium (LiFSI), et une concentration de bisfluorosulfonimide de lithium (LiFSI) est de 0,8 mol/L à 1,3 mol/L, de préférence de 0,9 mol/L à 1,1 mol/L.

5. Batterie secondaire selon l'une des revendications 1 à 4, dans laquelle le solvant organique comprend en outre un ou plusieurs de : carbonate de diméthyle (DMC) et carbonate de diéthyle (DEC) ;
de préférence, le rapport de masse du carbonate de diméthyle (DMC) et/ou du carbonate de diéthyle (DEC) dans le solvant organique est inférieur ou égal à 10 %.

6. Batterie secondaire selon l'une des revendications 1 à 5, dans laquelle l'électrolyte comprend en outre un additif, et l'additif comprend un ou plusieurs de : carbonate de fluoroéthylène (FEC), 1,2,3-dioxathiolane 2,2-dioxyde (DTD), 1,3-propane sultone (PS), 1,3-propenyl-sultone (PST), carbonate de vinylène (VC), anhydride succinique (SA), borate de tris(triméthylsilane) (TMSB), phosphate de tris(triméthylsilane) (TMSP), difluoro(oxalato)borate de lithium (LiDFOB) et difluorodioxaltophosphate de lithium (LiDFOP).

7. Batterie secondaire selon l'une des revendications 1 à 6, dans laquelle
une conductivité électrique de l'électrolyte à une température de 25°C est comprise entre 7 mS/cm et 9,5 mS/cm, de préférence, la conductivité électrique de l'électrolyte à une température de 25°C est comprise entre 7,5 mS/cm et 9,0 mS/cm ; et/ou
une viscosité de l'électrolyte à la température de 25°C est comprise entre 3,5 mPa·s et 5,5 mPa·s, de préférence, la viscosité de l'électrolyte à la température de 25°C est comprise entre 4 mPa·s et 5 mPa·s.

8. Batterie secondaire selon l'une des revendications 1 à 7, dans laquelle le matériau à base de silicium comprend un ou plusieurs de : silicium simple, composé de carbone de silicium, composé d'oxygène de silicium, composé d'azote de silicium et alliage de silicium ; de préférence, le matériau à base de silicium comprend le composé d'oxygène de silicium.

9. Batterie secondaire selon l'une des revendications 1 à 8, dans laquelle le matériau actif négatif comprend en outre un matériau de carbone, et le matériau de carbone comprend un ou plusieurs de : graphite naturel, graphite artificiel, carbone mou et carbone dur ; de préférence, le matériau de carbone comprend un ou plusieurs de graphite naturel et graphite artificiel.

10. Batterie secondaire selon l'une des revendications 1 à 9, dans laquelle le rapport de masse du matériau à base de silicium dans le matériau actif négatif est supérieur ou égal à 15 % ; de préférence, le rapport de masse du matériau à base de silicium dans le matériau actif négatif est compris entre 20 % et 40 %.

11. Batterie secondaire selon l'une des revendications 1 à 10, comprenant en outre une plaque d'électrode positive, la plaque d'électrode positive comprenant un collecteur de courant positif et un film d'électrode positive disposé sur au moins une surface du collecteur de courant positif et comprenant un matériau actif positif, le matériau actif positif comprenant un ou plusieurs de : un composés d'oxygène de lithium nickel cobalt manganèse et un oxyde d'aluminium de lithium nickel cobalt ;
de préférence, le matériau actif positif comprend un ou plusieurs matériaux dont la formule générale est LiₐNi_{b}Co_{c}M_{d}M'ₑO_{f}A_{g} ou un matériau LiₐNi_{b}Co_{c}M_{d}M'ₑO_{f}A_{g} avec une couche de revêtement sur au moins une partie de sa surface, où 0,8≤a≤1,2, 0,5≤b<1, 0<c<1, 0<d<1, 0≤e≤0,1, 1≤f≤2, 0≤g≤1, M est choisi parmi un ou plusieurs de Mn et Al, M' est choisi parmi un ou plusieurs de Zr, Al, Zn, Cu, Cr, Mg, Fe, V, Ti et B, et A est choisi parmi un ou plusieurs de N, F, S et Cl.

12. Batterie secondaire selon la revendication 11, dans laquelle le matériau active positive comprend en outre un ou plusieurs de : oxyde de lithium nickel, oxyde de lithium manganèse, phosphate de lithium fer, phosphate de lithium manganèse, phosphate de lithium manganèse fer, cobaltate de lithium, et leurs composés modifiés.

13. Appareil comprenant la batterie secondaire selon l'une des revendications 1 à 12.
